# FASCICULE DE BREVET EUROPEEN

(11) **EP 0 389 366 B1**
(45) Date de publication et mention de la délivrance du brevet: **14.06.1995**
(21) Numéro de dépôt: 90400773.9
(22) Date de dépôt: 21.03.1990
(51) Int. Cl.: H01H 19/14, B60R 16/00

(54) **Manette de commande en particulier pour véhicules automobiles comportant deux bagues rotatives**
Schalthebelgriff, insbesondere für Kraftfahrzeuge mit zwei Drehringen
Actuating lever handle, particularly for motor vehicles, with two rotating rings

(30) Priorité: 23.03.1989 FR 8903821
(43) Date de publication de la demande: 26.09.1990
(73) Titulaire: JAEGER, F-92303 Levallois-Perret (FR)
(72) Inventeur: Lagier, Daniel, F-92300 Nanterre (FR)
(74) Mandataire: Martin, Jean-Jacques

(56) Documents cités:
- EP-A- 0 160 905
- US-A- 2 811 867
- US-A- 2 813 942

## Description

La présente invention concerne une manette de commande, en particulier pour commutateur électrique de véhicules automobiles.

Le document US-A-2 811 867 décrit un dispositif de commande électrique conforme au préambule de la revendication 1.

La présente invention a pour but de proposer une manette de commande équipée de deux bagues de commande susceptibles de rotation, indépendamment l'une de l'autre, sur un corps commun, pour la mise en oeuvre de deux effets de commutation indépendants.

A cette fin la présente invention propose une manette de commande qui comprend :
- un corps,
- un support allongé creux fixé à rotation à l'intérieur du corps et centré sur l'axe de celui-ci,
- une première bague de commande guidée à rotation sur le support allongé,
- un équipage électrique lié à rotation avec ladite première bague de commande,
- un arbre guidé à rotation à l'intérieur du support allongé et accessible à l'extrémité arrière de celui-ci pour opérer un effet de commutation par actionnement mécanique, lors de sa rotation, et
- une deuxième bague de commande solidaire de l'extrémité avant de l'arbre,

caractérisé par le fait que
- des liaisons électriques associées à l'équipage électrique sont engagées entre le corps et le support allongé pour être accessibles à l'extrémité arrière du corps, et
- le support allongé, au moins sur une partie de sa longueur, a la forme d'un canal ouvert latéralement.

D'autres caractéristiques, buts et avantages de la présente invention apparaîtront à la lecture de la description détaillée qui va suivre, et en regard des dessins annexés donnés à titre d'exemples non limitatifs et sur lesquels :
- les figures 1 et 2 représentent des vues schématiques en coupe axiale longitudinale, respectivement perpendiculaires entre elles, d'une manette de commande conforme à un premier mode de réalisation de la présente invention,
- les figure 3 et 4 représentent des vues en coupe transversale, respectivement selon un plan de coupe référencé III-III et IV-IV sur la figure 1, de la même manette de commande,
- la figure 5 représente une vue axiale de la première bague de commande, vue suivant le plan de coupe IV-IV,
- la figure 6 représente une vue en coupe transversale de la même manette selon un plan de coupe référencé VI-VI sur la figure 1,
- la figure 7 représente une vue en coupe, du corps seul, selon le plan de coupe référencé IV-IV,
- la figure 8 représente une autre vue en coupe transversale de la même manette selon le plan de coupe référencé VIII-VIII sur la figure 2, et
- la figure 9 représente une vue schématique en coupe axiale longitudinale d'une manette de commande conforme à un second mode de réalisation conforme à la présente invention.

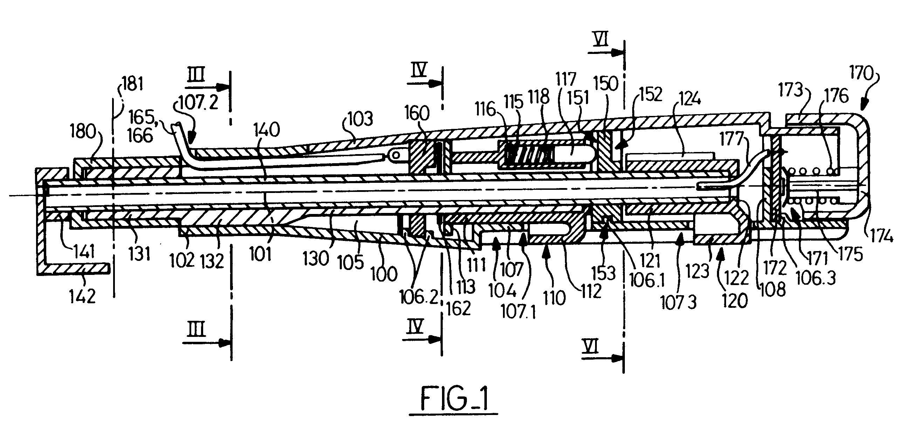

Dans la description qui va suivre, l'extrémité dite "avant" de la manette correspondra à l'extrémité représentée à droite des figures 1, 2 et 9 tandis que l'extrémité dite "arrière" de la manette correspondra à l'extrémité de celle-ci, illustrée sur la gauche des figures 1, 2 et 9, sans que cette qualification puisse être considérée comme limitative quant à la position occupée à l'utilisation par la manette.

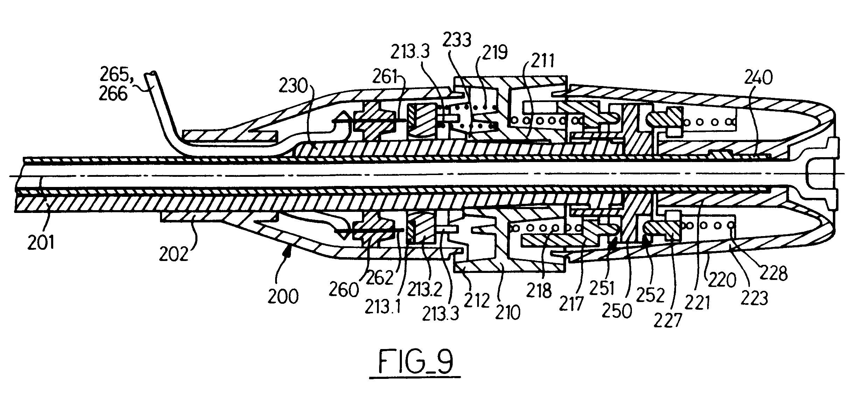

De même, dans la suite de la description, on appellera "zone inférieure du corps" la zone représentée en partie inférieure des figures 1 et 9, "zone supérieure du corps" la zone représentée en partie supérieure des figures 1 et 9, et "zones latérales du corps" les parties de celui-ci s'étendant pour l'essentiel parallèlement au plan des figures 1 et 9. Là encore cette qualification n'est aucunement limitative quant à la position occupée à l'utilisation par la manette.

Comme indiqué précédemment, pour l'essentiel la manette de commande conforme à la présente invention représentée sur les figures 1 à 8 comprend un corps 100 et deux bagues de commande rotatives référencées 110 et 120.

L'axe du corps 100 est référencé 101 sur les figures 1 à 8 annexées. Le corps 100 est formé d'un boîtier creux d'allure générale tronconique centré sur l'axe 101, et évasé vers l'avant de la manette.

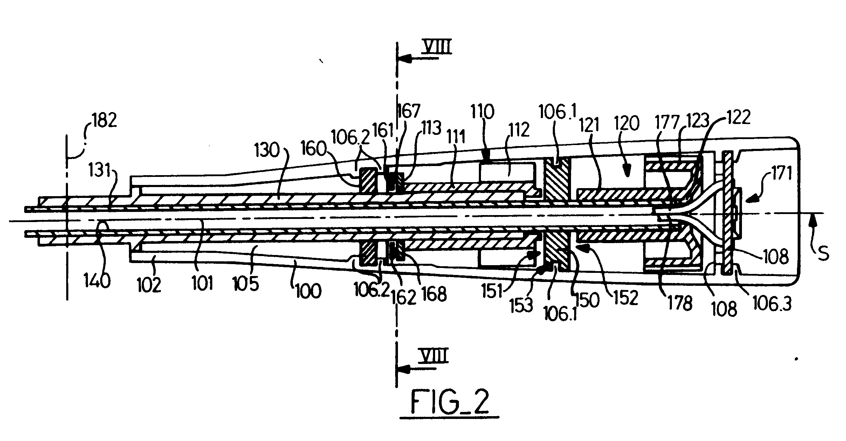

Plus précisément, selon les figures 1 à 8, le corps 100 présente, à son extrémité arrière, une structure annulaire continue 102, tandis que sur l'avant de celle-ci le corps 100 s'étend seulement sur un secteur angulaire de l'ordre de 180° autour de l'axe 101. Ce secteur angulaire correspond de préférence à la zone inférieure de la manette. Il est symétrique par rapport à un plan S passant par l'axe 101 et généralement parallèle aux zones latérales de la manette. Le plan S est parallèle au plan de la figure 1 et perpendiculaire au plan de la figure 2. Au niveau de ce secteur, le corps 100 est complété par une coquille complémentaire 103 (voir figures 4, 6, 7 et 8). La coquille 103 présente une ouverture angulaire de l'ordre de 180°. Elle complète le corps 100. La coquille 103 peut être fixée sur le corps 100 à l'aide de tout moyen classique approprié, tel que par encliquetage, collage ou équivalent.

On notera que de préférence, comme représenté sur les figures 1 à 8, le corps 100 présente vers l'avant, au niveau de sa partie inférieure, un renfoncement 104 qui autorise l'accès aux bagues de commande 110, 120, sans que celles-ci fassent saillie à l'extérieur de l'enveloppe générale du corps 100.

Le corps 100 en combinaison avec la coquille 103 définit une chambre interne 105 qui loge l'essentiel des éléments fonctionnels de la manette.

Le corps 100 présente par ailleurs, sur sa surface interne, un certain nombre de nervures destinées à supporter certains de ces éléments fonctionnels. Ces nervures seront décrites par la suite.

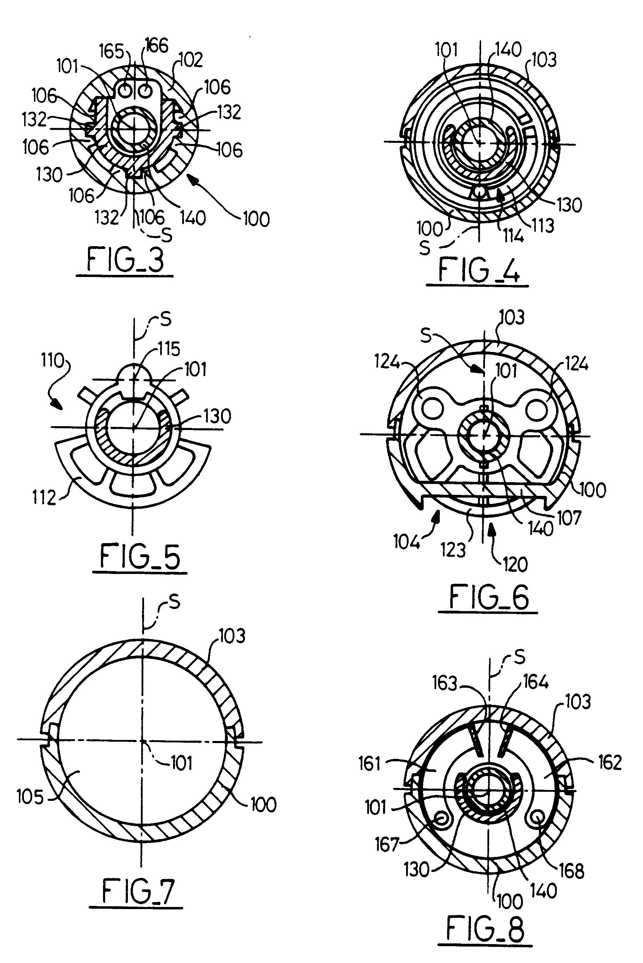

La manette comprend également un support allongé creux 130. Ce support 130 est fixé à rotation à l'intérieur du corps 100. Le support 130 est généralement centré sur l'axe 101. Selon la représentation donnée sur les figures annexées, le support allongé 130 émerge à l'extrémité arrière du corps 100. A ce niveau le support allongé 130 est formé d'une structure cylindrique continue centrée sur l'axe 101, et référencée 131 sur la figure 1. Sur l'avant de cette structure cylindrique 131, le support allongé 130 a la forme d'un canal en "U" ouvert vers le haut de la manette. Le support allongé 130 est fixé à rotation par rapport au corps 100, grâce à des nervures longitudinales 132 prévues sur la surface extérieure du support 130, et engagées entre des paires de nervures associées 106 prévues sur la surface interne du corps 100 (voir figure 3). Les nervures 132, au nombre de trois selon la figure 1, mais cette disposition n'est pas limitative, sont prévues immédiatement sur l'avant de la structure cylindrique 131 du support 130. Les nervures complémentaires associées 106 sont réalisées sur la surface interne de la structure annulaire continue 102 du corps 100. Selon la représentation des figures 1 à 8, le support allongé 130 s'étend à l'intérieur de la chambre 105, sensiblement à mi-longueur du corps 100.

La première bague de commande 110 peut bien entendu faire l'objet de nombreux modes de réalisation. Pour l'essentiel, la première bague de commande 110 représentée sur les figures annexées comprend un moyeu central annulaire 111 engagé sur l'extrémité avant du support 130, de sorte que la première bague de commande 110 soit guidée à rotation autour de l'axe 101. La bague 110 possède une jupe externe 112 sur l'extérieur du moyeu 111. La jupe externe 112 se raccorde sur l'extrémité avant du moyeu 111. De préférence, la jupe 112 est limitée à un secteur angulaire de l'ordre de 150° autour de l'axe 101 (voir figure 5).

Sur la figure 1, on a référencé 107 la paroi du corps 100 au niveau du renfoncement 104.

Le moyeu 111 est placé radialement à l'intérieur de cette paroi 107. En revanche, le secteur de jupe 112 qui présente un plus grand rayon, par rapport à l'axe 101, que la paroi 107, est engagé dans une découpe 107.1 ménagée dans cette paroi 107, de sorte que le secteur de jupe 112 soit accessible au niveau du renfoncement 104.

Le moyeu 111 supporte à son extrémité arrière une plaquette de circuit 113. Cette plaquette 113 est réalisée en matériau électriquement isolant. Elle a la forme générale d'une couronne engagée sur le support 130. La plaquette 113 peut être munie de pistes électriquement conductrices opérant un effet de commutation en combinaison avec des lamelles élastiques électriquement conductrices 161, 162, portées par une platine porte-contact 160 qui sera évoquée par la suite. La plaquette 113 peut également être munie de pistes électriquement conductrices et de pistes électriquement résistantes, pour former une résistance variable ou un rhéostat en combinaison avec les lamelles 161, 162. De telles pistes portées par la plaquette 113 sont illustrées schématiquement sous la référence 114 sur la figure 4.

La bague de commande 110 est également indexée dans sa rotation autour de l'axe 101. Pour cela la bague de commande 110 coopère avec une platine d'indexage 150. Cette platine 150 a la forme générale d'un anneau s'étendant transversalement à l'axe 101. La platine 150 est pourvue sur sa surface arrière 151, et sur sa surface avant 152, de crantages généralement radiaux, assurant l'indexation respectivement de la première bague de commande 110 et de la deuxième bague de commande 120.

La platine 150 présente sur sa périphérie, et plus précisément au niveau de sa partie inférieure et de ses parties latérales, une rainure 153 généralement annulaire autour de l'axe 101. Cette rainure 153 reçoit une nervure complémentaire 106.1 transversale à l'axe 101, solidaire de la surface interne du corps 100 (voir figures 1 et 2). Ainsi, la platine 150 est immobilisée à translation par rapport au corps 100.

Comme représenté sur la figure 5, le moyeu 111 de la bague de commande 110 est muni d'un fourreau 115. Celui-ci s'étend parallèlement à l'axe 101. Il est de préférence sensiblement diamètralement opposé par rapport au secteur de jupe 112. Le fourreau 115 définit une chambre cylindrique 116. La chambre 116 s'étend parallèlement à l'axe 101. Elle est borgne et ouverte vers l'avant de la manette. La chambre 116 reçoit un plot d'indexation 117. Un ressort 118 intercalé entre le fond de la chambre 116 et le plot d'indexation 117 sollicite celui-ci en direction de la surface d'indexation 151 ménagée sur la platine 150. Celle-ci est en effet placée immédiatement sur l'avant de la première bague de commande 110. Plus précisément, la platine d'indexation 150 est intercalée entre la première bague de commande 110 et la seconde bague de commande 120.

De préférence, le plot d'indexation 117 a la forme générale d'un cylindre terminé à son extrémité avant par une calotte hémisphérique reposant contre la surface d'indexation 151.

De façon généralement comparable à la platine d'indexation 150, la platine porte-contact 160 est formée d'un anneau transversal à l'axe 101. La platine porte-contact 160 est engagée entre des paires de nervures parallèles entre elles 106.2 s'étendant sur la surface interne du corps 100, au niveau de la zone inférieure et des zones latérales de celui-ci. La platine porte-contact 160, et par conséquent les nervures complémentaires 106.2, sont prévues sur l'arrière de la première bague de commande 110. On notera que la platine porte-contact 160, la première bague de commande 110, la platine d'indexation 150 et la seconde bague de commande 120 sont placées sur l'avant de la structure annulaire continue du corps 100, soit au niveau du secteur limité de celui-ci. Ainsi, la platine porte-contact 160 peut être engagée sur les nervures 106.2 par une translation transversale à l'axe 101, de même la platine d'indexation 150 peut être engagée sur la nervure 106.1 par translation transversale à l'axe 101 et les bagues de commande 110 et 120 peuvent être placées dans le corps 100 par translation transversale à l'axe 101, avant fixation de la coquille 103 sur le corps 100. Selon la représentation donnée sur les figures annexées, la platine porte-contact 160 supporte deux lames 161, 162. De préférence ces deux lamelles 161, 162, ont la forme générale de secteurs de couronne s'étendant transversalement à l'axe 101. Ces secteurs de couronne ont une amplitude angulaire de l'ordre de 90°. Ils sont symétriques par rapport au plan S. Les extrémités supérieures sensiblement adjacentes des lamelles 161, 162, se prolongent par des branches 163, 164, généralement parallèles entre elles et parallèles à l'axe 101. Ces branches 163, 164 traversent la platine porte-contact 160. Les lamelles 161, 162, sont placées sur l'avant de la platine porte-contact 160. Les branches 163, 164, sont par conséquent accessibles sur la surface arrière de la platine porte-contact 160. A ce niveau les branches 163, 164, sont soudées sur des liaisons électriquement conductrices 165, 166 (voir figure 3). Ces liaisons 165, 166, sont engagées dans la forme de canal du support allongé 130, et passent par une découpe 107.2 ménagée à l'extrémité arrière du corps 100 de sorte que les liaisons filaires 165, 166, soient accessibles sur l'extrémité arrière de la manette.

Au niveau de leur extrémité libre (opposée à celle se prolongeant par les branches 163, 164), les lamelles 161, 162, présentent sur leur surface avant, des plots électriquement conducteurs 167, 168, qui reposent contre les pistes prévues sur la plaquette 113.

En l'espèce, la plaquette 113 constitue l'équipage électrique précité, lié à rotation avec la première bague de commande 110. Un arbre 140 est engagé à l'intérieur du support allongé 130. L'arbre 140 est guidé à rotation autour de l'axe 101. L'arbre 140 selon la représentation donnée sur les figures 1 et 2 a la forme d'un tube centré sur l'axe 101. Celui-ci émerge à la fois à l'extrémité arrière et à l'extrémité avant du support allongé 130.

Un dispositif entraîneur 141 possédant un doigt 142 excentré par rapport à l'axe 101, est engagé (pour être immobilisé à rotation et à translation) sur l'extrémité arrière de l'arbre 140. Cet actionneur 141, et plus précisément le doigt excentré 142 de celui-ci est destiné à opérer tout effet de commutation approprié par actionnement mécanique d'un coulisseau ou équivalent porte-contact. Un tel effet de commutation par actionnement mécanique d'un doigt excentré est bien connu de l'homme de l'art et ne sera donc pas exposé plus en détail par la suite.

La seconde bague de commande 120 est engagée sur l'extrémité avant de l'arbre 140. La seconde bague de commande 120 peut faire l'objet de nombreux modes de réalisation.

Pour l'essentiel, selon la représentation donnée sur les figures annexées, la seconde bague de commande 120 comprend un moyeu 121 engagé à force sur l'extrémité avant de l'arbre 140 pour être immobilisé à rotation et à translation par rapport à celui-ci. On notera que sur l'extrémité avant du moyeu 121 il est prévu une nervure annulaire interne 122 prenant appui sur la surface transversale avant de l'arbre 140, pour définir ainsi une butée axiale à la seconde bague de commande 120. Cette bague 120 possède par ailleurs une jupe externe 123 de plus grand évasement radial que le moyeu 121. La jupe externe 123 se raccorde sur l'extrémité avant du moyeu 121. Elle présente de préférence une ouverture angulaire limitée de l'ordre de 180°. La jupe 123 est placée dans une découpe 107.3 ménagée dans la paroi 107. Le moyeu 121 est placé radialement à l'intérieur de la paroi 107. Par contre, la jupe 123 possède un rayon supérieur au moyeu 121 de sorte que le secteur de jupe 123 s'étende radialement à l'extérieur de la paroi 107 pour être accessible au niveau du renfoncement 104. De façon similaire à la première bague de commande 110, la seconde bague de commande 120 est indexée dans sa rotation autour de l'axe 101. Pour cela, le moyeu 121 porte deux fourreaux 124. Ceux-ci s'étendent parallèlement à l'axe 101. Ils sont symétriques par rapport au plan S. Ils définissent des chambres cylindriques parallèles à l'axe 101, borgnes et ouvertes vers l'arrière de la manette. Ces chambres borgnes reçoivent, de façon classique en soi, des plots d'indexation sollicités par ressort contre la surface d'indexation 152 ménagée sur la platine 150.

On notera que la manette est équipée de préférence d'un support pivotant 180. Ce support est représenté schématiquement et partiellement sur l'extrémité arrière de la manette, plus précisément sur l'extrémité arrière du support allongé 130 et de l'arbre 140. Le support pivotant 180 a de préférence pour fonction de guider la manette représentée sur les figures annexées autour de deux axes orthogonaux entre eux et perpendiculaires à l'axe 101. Ces axes sont référencés schématiquement 181 et 182 sur les figures 1 et 2 annexée. De façon connue en soi, le pivotement de la manette autour des axes 181, 182, a pour effet de commander des pièces associées, telles que des coulisseaux porte-contact prévus à l'intérieur d'un commutateur électrique, pour assurer des fonctions de commutation électrique auxiliaire.

De telles dispositions, connues en soi, ne seront pas décrites plus en détail par la suite.

Par ailleurs, de préférence, la manette de commande conforme à la présente invention comprend en outre un bouton poussoir 170.

Le bouton poussoir est placé sur l'extrémité avant du corps 100. Il est susceptible de translation parallèlement à l'axe 101 pour commander un élément interrupteur 171. Celui-ci est porté par une plaquette 172 fixée sur l'extrémité avant d'une toile 108. Cette toile 108 s'étend transversalement à l'axe 101. Elle est solidaire du corps 100. L'élément interrupteur 171 est avantageusement un élément cloquant. Le bouton poussoir 170 peut faire l'objet de nombreux modes de réalisation. Selon la représentation donnée sur les figures annexées, le bouton poussoir 170 comprend une jupe cylindrique 173 obturée à son extrémité avant par une paroi transversale 174. De préférence, bien que cela ne soit pas représenté sur les figures annexées pour simplifier l'illustration, la jupe cylindrique 173 est munie sur sa surface externe et à son extrémité arrière de dentures venant reposer contre des ailettes du corps 100 pour interdire le retrait du bouton poussoir 170. La paroi 174 porte sur sa surface interne et vers l'arrière une tige centrale 175 centrée sur l'axe 101 et dirigée vers l'élément interrupteur 171. Ainsi, lorsque le bouton poussoir 170 est sollicité vers l'arrière, par translation selon l'axe 101, la tige centrale 175 peut venir actionner l'élément interrupteur 171 pour modifier l'état de celui-ci. Si l'élément interrupteur 171 est un élément cloquant, celui-ci peut assurer à lui seul le rappel en position de repos du bouton poussoir 170. Sinon (ou dans le cas où l'élasticité de l'élément cloquant 171 ne serait pas suffisante) un ressort de rappel 176 peut être associé au bouton 170. L'élément interrupteur 171 est relié à des liaisons électriques 177, 178. Celles-ci traversent le voile 108 et sont engagées dans l'arbre tubulaire 140 pour être accessibles à l'extrémité arrière de la manette. A cet effet, on notera que comme représenté sur les figures annexées, l'extrémité avant de la seconde bague de commande 120 et l'entraîneur 141 sont munis de passages traversants pour les liaisons électriques 177, 178.

Pour assembler la manette de commande conforme à la présente invention, on procède pour l'essentiel comme suit.

La platine porte-contact 160 équipée des lamelles 161, 162, est engagée sur les nervures 106.2. On veille à rendre les liaisons électriques 165, 166, accessibles à l'extrémité arrière du corps 100. La platine d'indexation 150 est engagée sur la nervure 106.1. La première bague de commande 110 équipée du plot d'indexation 117, du ressort 118 associé et de la plaquette 113 est engagée dans le corps 100 entre les platines 150, 160. Le support 140 est alors engagé à translation par l'extrémité arrière dans le corps 100. Le support 140 est ainsi engagé dans la platine 160 et la première bague de commande 110. On notera que le ressort d'indexation 118 et l'élasticité des lamelles 161, 162, limitent le débattement axial de la première bague de commande 110 et définissent un contact fiable entre les lamelles 161, 162 et les pistes associées prévues sur la plaquette 113. La deuxième bague de commande 120 est équipée des ressort et poussoir d'indexation associé, puis placée dans le corps 100 de la manette. L'entraîneur 141 est serti sur l'arbre 140 et l'ensemble est enfilé par l'extrémité arrière de la manette dans le support 130 puis chassé dans le moyeu 121 de la seconde bague de commande 120. On notera qu'une cale est de préférence prévue pour définir un jeu fonctionnel. La plaquette 172 est fixée sur le voile 108. Pour cela la plaquette 172 peut être placée entre le voile 108 et une nervure 106.3 prévue sur la surface interne du corps. Les liaisons électriques 177, 178, doivent être enfilées dans l'arbre tubulaire 140. On rappelle que le support allongé 130 et l'arbre tubulaire 140 sont engagés par translation parallèle à l'axe 101, alors que les platines 150, 160, les bagues de commande 110, 120, et la plaquette 172 sont engagées par translation transversale à l'axe 101 grâce à l'ouverture supérieure initiale du corps 100. Le couvercle ou coquille 103 est alors mis(e) en place puis fixé(e) sur le corps 100 par exemple par sertissage aux ultrasons. Le bouton 170 équipé éventuellement de son ressort 176 est cloqué sur l'extrémité avant de la manette. Celle-ci est alors prête à l'utilisation.

La rotation de la première bague de commande 110 opère la rotation de la plaquette 113 et entraîne par conséquent une modification de l'état électrique entre les liaisons filaires 165, 166 (modification de l'état électrique correspondant soit à un effet de commutation, soit à une variation de résistance).

La rotation de la seconde bague de commande 120 entraîne à rotation l'arbre tubulaire 140 et par conséquent le doigt excentré 142 pour générer un effet de commutation.

Enfin, le déplacement à translation du bouton 170 permet d'actionner l'interrupteur 171.

Les trois fonctions précitées sont bien entendu indépendantes l'une de l'autre.

On va maintenant décrire le second mode de réalisation conforme à la présente invention représenté sur la figure 9 annexée.

On notera tout d'abord que les éléments de ce second mode de réalisation, fonctionnellement équivalents aux éléments précédemment décrits du premier mode de réalisation représenté sur les figures 1 à 8 présentent des références numériques respectivement incrémentées de 100 par rapport aux éléments fonctionnellement équivalents du premier mode de réalisation.

On retrouve sur la figure 9 annexée un corps 200 de manette, une première bague de commande 210 et une deuxième bague de commande 220. L'axe du corps 200 est référencé 201. Le corps 200 présente à son extrémité arrière une structure tubulaire continue 202 centrée sur l'axe 201. Cette structure 202 se prolonge vers l'avant par une structure généralement tronconique centrée sur l'axe 201 et évasée vers l'avant. La première bague de commande 210 est placée sur l'avant de cette structure tronconique évasée. La deuxième bague de commande 220 est placée elle-même sur l'avant de la première bague de commande 210. La première bague de commande 210 est guidée à rotation sur un support allongé 230. Ce support est centré sur l'axe 201. Il est fixé à rotation et à translation par rapport au corps 200. Le support allongé 230 reçoit lui-même un arbre 240. De préférence, cet arbre 240 est tubulaire comme indiqué pour le premier mode de réalisation. Une platine porte-contact 260 est supportée à l'intérieur du corps 200 sur l'arrière de la première bague de commande 210. La platine porte-contact 260 a la forme générale d'un anneau centré sur l'axe 201. Elle porte des éléments électriquement conducteurs 261, 262. Ceux-ci traversent la platine 260, parallèlement à l'axe 201. Ils sont accessibles sur la surface avant et sur la surface arrière de la platine 260. Sur l'arrière de celle-ci, les éléments électriquement conducteurs 261, 262 sont fixés, par exemple par soudage sur des liaisons électriquement conductrices 265, 266. Celles-ci émergent à l'extrémité arrière de la manette, en étant engagées entre le corps 200 et le support allongé 230. Sur l'avant de la platine 260, les éléments électriquement conducteurs 261, 262 reposent contre des pistes associées électriquement conductrices, ou électriquement résistantes, portées par une plaquette 213.1, elle-même supportée par une platine annulaire 213.2. La plaquette 213.1 a la forme générale d'une couronne transversale à l'axe 201. La plaquette 213.1 et la platine 213.2 qui la porte sont libres de translation par rapport à la première bague de commande 210, selon l'axe 201. En revanche, la plaquette 213.1 et la platine 213.2 sont fixées à rotation par rapport à la première bague de commande 210. Pour ce faire, la platine 213.2 est pourvue sur sa face avant de doigts excentrés 213.3 s'étendant parallèlement à l'axe 201 et engagés dans des logements complémentaires ménagés dans la bague de commande 210, ou inversement. Des ressorts 219 sont engagés entre la surface arrière de la première bague de commande 210 et la platine porte-contact 213. Ainsi, la platine porte-contact 213 est sollicitée en appui contre les éléments électriquement conducteurs 261. Ces ressorts 219, par exemple au nombre de 3, sont équirépartis autour de l'axe 201.

Selon la représentation donnée sur la figure 9 annexée, la première bague de commande 210 est formée d'un moyeu 211 engagé sur le support 230 et d'une jupe annulaire externe 212 reliée au moyeu 211 par une toile transversale à l'axe 201. La jupe externe 212 peut s'étendre sur 360° autour de l'axe 201, ou seulement sur un secteur limité de façon similaire au premier mode de réalisation précédemment décrit. Une platine d'indexation 250 est placée sur l'avant de la première bague de commande 210. La platine 250 est chassée sur l'extrémité avant du support 230 afin d'être immobilisée à rotation et à translation. La platine 250 définit des surfaces d'indexation 151, 152, respectivement sur ses faces arrière et avant. La première bague de commande 210 porte au moins un plot d'indexation 217 sollicité contre la surface d'indexation 251 par un ressort 218. La première bague de commande 210 est ainsi indexée dans sa rotation autour de l'axe 201.

La seconde bague de commande 220 est placée sur l'avant de la première bague de commande 210. Elle est chassée sur l'extrémité avant de l'arbre 240, de sorte que la deuxième bague de commande 220 soit fixée à rotation et à translation sur l'arbre 240. On rappelle que cet arbre 240 est engagé dans le support allongé 230 et émerge à la fois à l'extrémité arrière et à l'extrémité avant de celui-ci. La deuxième bague de commande 220 porte au moins un plot 227 sollicité contre la surface d'indexation 252 par un ressort 228, de sorte que la deuxième bague de commande 220 est indexée lors de sa rotation autour de l'axe 201.

Là encore, la deuxième bague de commande 220 est formée d'un moyeu central 221 chassé sur l'extrémité avant de l'arbre tubulaire 240 et d'une jupe externe 223 reliée au moyeu 221 par l'intermédiaire d'une toile transversale à l'axe 201. La jupe externe 223 peut s'étendre sur 360° autour de l'axe 201, ou seulement sur un secteur angulaire limité.

De préférence la manette se termine, sur l'avant de la deuxième bague de commande 220, par un bouton. Celui-ci peut servir uniquement d'habillage pour obturer l'extrémité avant de la manette. Cependant, de préférence, comme décrit en regard des figures 1 et 2, le bouton 170 est susceptible de translation parallèlement à l'axe 201 pour commander un interrupteur associé. Cette disposition ne sera pas décrite plus en détail en regard de la figure 9. En variante, on notera que au lieu de commander un interrupteur porté à l'extrémité avant de la manette et relié à des liaisons électriques enfilées dans l'arbre tubulaire 140 ou 240, le bouton 170 peut être fixé sur une tige rigide enfilée dans l'arbre de commande 240, pour assurer un effet de commutation, par actionnement mécanique, sur un organe placé à l'extrémité arrière de la manette. Une disposition similaire peut être prévue pour le premier mode de réalisation représenté sur les figures 1 et 2, en remplacement de l'interrupteur électrique 171.

Alors que selon le premier mode de réalisation représenté sur les figures 1 à 8, les platines 150, 160, les bagues 110, 120 et la plaquette 172 devaient être engagées transversalement à l'axe 201, selon le deuxième mode de réalisation, l'ensemble des éléments de la manette sont engagés axialement, parallèlement à l'axe 201.

Là encore, la rotation de la première bague de commande 210 permet de modifier l'état électrique entre les liaisons 165, 166. La rotation de la deuxième bague de commande permet d'entraîner à rotation l'arbre tubulaire 240. Enfin, la translation du bouton avant permet soit d'actionner un interrupteur 171, soit de déplacer une tige rigide associée pour générer un troisième effet de commutation.

De préférence, la platine porte-contact 260 est immobilisée à rotation et à translation dans le corps 200 par appui sur des nervures complémentaires solidaires de la surface interne du corps 200, de façon similaire au mode de réalisation précédemment décrit en regard des figures 1 à 8.

Par ailleurs, de préférence, le support allongé 230 définit une butée axiale vers l'arrière pour la première bague de commande 210. Cette butée est formée par un décrochement 233 formé sur la surface extérieure du support allongé 230 et dirigé vers l'avant.

Bien entendu le nombre de conducteurs portés par la platine 160 ou 260 n'est pas limité à deux.

A titre d'exemple non limitatif, selon le premier mode de réalisation représenté sur les figures 1 à 8, la première bague de commande 110 peut être utilisée pour régler la vitesse de déplacement d'essuie-vitres, la deuxième bague de commande 120 peut être utilisée pour une sélection d'éclairage ou de mise en fonctionnement d'essuie-lave vitres, tandis que le bouton 170 peut être utilisé par exemple pour commander les avertisseurs sonores.

Selon le second mode de réalisation représenté sur la figure 9, la première bague de commande 210 peut être utilisée par exemple pour assurer l'actionnement des projecteurs ou feux anti-brouillard avant et arrière, tandis que la deuxième bague de commande 220 serait utilisée pour assurer une sélection d'éclairage.

## Revendications

1. Manette de commande comprenant :
- un corps (100, 200),
- un support allongé (130, 140) creux fixé à rotation à l'intérieur du corps (100, 200) et centré sur l'axe (101, 201) de celui-ci,
- une première bague (110, 210) de commande guidée à rotation sur le support allongé,
- un équipage électrique (113, 213) lié à rotation avec ladite première bague de commande (110, 210),
- un arbre (140, 240) guidé à rotation à l'intérieur du support allongé (130, 230) et accessible également à l'extrémité arrière de celui-ci pour opérer un effet de commutation par actionnement mécanique, et
- une deuxième bague de commande (120, 220) solidaire de l'extrémité avant de l'arbre (140, 240),
caractérisée par le fait que
- des liaisons électriques (165, 166, 265, 266) associées à l'équipage électrique sont engagées entre le corps (100, 200) et le support allongé (130, 230) pour être accessibles à l'extrémité arrière du corps,
et le support allongé (130, 230), au moins sur une partie de sa longueur, a la forme d'un canal ouvert latéralement.

2. Manette de commande selon la revendication 1, caractérisée par le fait qu'une platine d'indexation (150, 250) est placée entre la première et la deuxième bagues de commande (110, 210, 120, 220).

3. Manette de commande selon la revendication 2, caractérisée par le fait que la platine d'indexation (150) est fixée sur le corps (100).

4. Manette de commande selon la revendication 3, caractérisée par le fait que la platine d'indexation (150) est fixée sur une nervure (106.1) solidaire de la surface interne du corps (100).

5. Manette de commande selon la revendication 2, caractérisée par le fait que la platine d'indexation (250) est fixée sur le support allongé (230).

6. Manette selon l'une des revendications 1 à 5, caractérisée par le fait qu'une platine porte-contact (160, 260) est placée à l'arrière de la première bague de commande (110, 210).

7. Manette de commande selon la revendication 6, caractérisée par le fait que la platine porte-contact (160, 260) est fixée sur le corps (100, 200).

8. Manette de commande selon la revendication 7, caractérisée par le fait que la platine porte-contact (160, 260) est fixée sur des nervures (106.2) prévues sur la surface interne du corps (100, 200).

9. Manette de commande selon l'une des revendications 6 à 8, caractérisée par le fait que la platine porte-contact (160, 260) est munie d'éléments conducteurs traversants (163, 164, 261, 262).

10. Manette de commande selon la revendication 9, caractérisée par le fait que les éléments conducteurs traversants (163, 164, 261, 262), sur l'arrière de la platine porte-contact (160, 260) sont reliés aux liaisons électriques (165, 166, 265, 266), et sur l'avant de la platine porte-contact (160, 260) repose contre l'équipage électrique (113, 213).

11. Manette de commande selon la revendication 10, caractérisée par le fait que l'équipage (113) est lié à translation avec la première bague de commande (110).

12. Manette de commande selon la revendication 11, caractérisée par le fait que les éléments électriquement conducteurs (161, 162) traversants la platine porte-contact (160) sont élastiques.

13. Manette de commande selon la revendication 10, caractérisée par le fait que l'équipage (213) est susceptible de débattement à translation par rapport à la première bague de commande (210), tout en étant lié à rotation avec celle-ci, et par le fait qu'au moins un ressort (219) est intercalé entre la première bague de commande (210) et la platine porte-contact (213).

14. Manette de commande selon la revendication 13, caractérisée par le fait que les éléments conducteurs traversants la platine porte-contact (260) sont rigides.

15. Manette de commande selon l'une des revendications 1 à 14, caractérisée par le fait que l'arbre (140, 240) solidaire de la seconde bague de commande (120, 220) est formé d'un élément tubulaire creux.

16. Manette de commande selon la revendication 15, caractérisée par le fait qu'elle comprend en outre un bouton (170) susceptible de translation pour actionner un interrupteur électrique associé à des liaisons électriquement conductrices (177, 178) engagées dans l'arbre tubulaire creux (140).

17. Manette de commande selon la revendication 15, caractérisée par le fait qu'il comprend en outre un bouton susceptible de translation pour déplacer une tige rigide (175) associée enfilée dans l'arbre tubulaire creux (140, 240).

18. Manette de commande selon l'une des revendications 1 à 17, caractérisée par le fait que l'une au moins des bagues de commande (210, 220) comprend une jupe externe annulaire continue couvrant 360° autour de l'axe (201) de la manette.

19. Manette de commande selon l'une des revendications 1 à 18, caractérisée par le fait que l'une au moins de bagues (110, 120) comprend une jupe externe (112, 123) limitée à un secteur angulaire autour de l'axe (101) de la manette, et accessible dans un renfoncement (104) ménagé dans le corps (100).

20. Manette de commande selon l'une des revendications 1 à 19, caractérisée par le fait que le corps (100), au moins sur une partie de sa longueur, présente un secteur angulaire limité par rapport à l'axe (101) de la manette, pour permettre un engagement latéral de certains éléments, à l'intérieur du corps (100), et par le fait qu'il est prévu en outre une coquille (103) adaptée pour être fixée sur la forme en secteur du corps (100).

## Patentansprüche

1. Bedienungsgriff mit
- einem Körper (100, 200)
- einem hohlen langgestreckten Halter (130, 140), der drehbar im Inneren des Körpers (100, 200) angebracht und um dessen Achse (101, 201) zentriert ist,
- einem ersten Bedienungsring (110, 210), der drehbar auf dem langgestreckten Halter geführt ist,
- einem elektrischen Element (113, 213), das drehbar mit dem ersten Bedienungsring (110, 210) in Verbindung steht,
- einer Achse (140, 240), die drehbar im Inneren des langgestreckten Halters (130, 230) geführt ist und gleichfalls an dessen rückseitigem Ende zugänglich ist, um über eine mechanische Wirkung einen Schalteffekt zu bewirken, und
- einem zweiten Bedienungsring (120, 220), der am vorderen Ende der Achse (140, 240) befestigt ist, dadurch gekennzeichnet, daß
die elektrischen Verbindungen (165, 166, 265, 266), die mit dem elektrischen Element verbunden sind, zwischen dem Körper (100, 200) und dem langgestreckten Halter (130, 230) eingesetzt sind, damit sie am rückseitigen Ende des Körpers zugänglich sind, und der langgestreckte Halter (130, 230) an wenigstens einem Teil seiner Länge die Form eines seitlichen offenen Kanals hat.

2. Bedienungsgriff nach Anspruch 1, dadurch gekennzeichnet, daß eine Schaltplatte (150, 250) zwischen dem ersten und dem zweiten Bedienungsring (110, 210, 120, 220) angeordnet ist.

3. Bedienungsgriff nach Anspruch 2, dadurch gekennzeichnet, daß die Schaltplatte (150) am Körper (100) befestigt ist.

4. Bedienungsgriff nach Anspruch 3, dadurch gekennzeichnet, daß die Schaltplatte (150) an einem Steg (106.1) befestigt ist, der fest mit der Innenfläche des Körpers (100) verbunden ist.

5. Schaltgriff nach Anspruch 2, dadurch gekennzeichnet, daß die Schaltplatte (250) am langgestreckten Halter (230) befestigt ist.

6. Bedienungsgriff nach einem der Ansprüche 1 bis 5, dadurch gekennzeichnet, daß eine Kontaktträgerplatte (160, 260) an der Rückseite des ersten Bedienungsringes (110, 210) angeordnet ist.

7. Bedienungsgriff nach Anspruch 6, dadurch gekennzeichnet, daß die Kontaktträgerplatte (160, 260) am Körper (100, 200) befestigt ist.

8. Bedienungsgriff nach Anspruch 7, dadurch gekennzeichnet, daß die Kontaktträgerplatte (160, 260) an Stegen (106.2) befestigt ist, die an der Innenfläche des Körpers (100, 200) vorgesehen sind.

9. Bedienungsgriff nach einem der Ansprüche 6 bis 8, dadurch gekennzeichnet, daß die Kontaktträgerplatte (160, 260) mit querverlaufenden Leiterelementen (163, 164, 261, 262) versehen ist.

10. Bedienungsgriff nach Anspruch 9, dadurch gekennzeichnet, daß die querverlaufenden Leiterelemente (163, 164, 261, 262) an der Rückseite der Kontaktträgerplatte (160, 260) mit elektrischen Verbindungen (165, 166, 265, 266) verbunden sind und an der Vorderseite der Kontaktträgerplatte (160, 260) am elektrischen Element (113, 213) anliegen.

11. Bedienungsgriff nach Anspruch 10, dadurch gekennzeichnet, daß das Element (113) bewegbar mit dem ersten Bedienungsring (110) verbunden ist.

12. Bedienungsgriff nach Anspruch 11 , dadurch gekennzeichnet, daß die querverlaufenden elektrischen Leiterelemente (161, 162) der Kontaktträgerplatte (160) elastisch ausgebildet sind.

13. Bedienungsgriff nach Anspruch 10, dadurch gekennzeichnet, daß das Element (213) federnd bezüglich des ersten Bedienungsringes (210) verschiebbar ist, so daß es damit in Drehverbindung kommt, und daß wenigstens eine Feder (219) zwischen dem ersten Bedienungsring (210) und der Kontaktträgerplatte (213) vorgesehen ist.

14. Bedienungsgriff nach Anspruch 13, dadurch gekennzeichnet, daß die querverlaufenden Leiterelemente der Kontaktträgerplatte (260) starr sind.

15. Bedienungsgriff nach einem der Ansprüche 1 bis 14, dadurch gekennzeichnet, daß die Achse (140, 240), die fest mit den zweiten Bedienungsring (120, 220) verbunden ist, aus einem Hohlrohrelement gebildet ist.

16. Bedienungsgriff nach Anspruch 15, dadurch gekennzeichnet, daß er weiterhin einen Knopf (170) umfaßt, der translationsbeweglich ist, um einen elektrischen Schalter zu betätigen, der mit den elektrisch leitenden Verbindungen (177, 178) verbunden ist, die in die hohlrohrförmige Achse (140) eingesetzt sind.

17. Bedienungsgriff nach Anspruch 15, dadurch gekennzeichnet, daß er weiterhin einen Knopf umfaßt, der translationsbeweglich ist, um einen damit verbundenen starren Schaft (175) zu verschieben, der in die hohlrohrförmige Achse (140, 240) eingesetzt ist.

18. Bedienungsgriff nach einem der Ansprüche 1 bis 17, dadurch gekennzeichnet, daß wenigstens einer der Bedienungsringe (210, 220) eine äußere ringförmige, durchgehend 360° um die Achse (210) des Griffes umschließende Schürze umfaßt.

19. Bedienungsgriff nach einem der Ansprüche 1 bis 18, dadurch gekennzeichnet, daß wenigstens einer der Ringe (110, 120) eine äußere Schürze (112, 123) umfaßt, die auf einen Winkelsektor um die Achse (101) des Griffes beschränkt ist und in einer Verstärkung (104) zugänglich ist, die im Körper (100) ausgebildet ist.

20. Bedienungsgriff nach einem der Ansprüche 1 bis 19, dadurch gekennzeichnet, daß der Körper (100) wenigstens über einen Teil seiner Länge einen bezüglich der Achse (101) des Griffes begrenzten Sektorwinkel zeigt, um ein seitliches Einsetzen gewisser Elemente im Inneren des Körpers (100) zu ermöglichen, und daß er weiterhin mit einer Schale (103) versehen ist, die an der Sektorform des Körpers (100) angebracht werden kann.

## Claims

1. A control lever comprising:
a body (100, 200);
a hollow elongate support (130, 140) rotatably fixed inside the body (100, 200) and centered on the axis (101, 201) thereof;
a first control ring (110, 210) guided in rotation on the elongate support;
electrical equipment (113, 213) rotatably associated with said first control ring (110, 210);
a shaft (140, 240) rotatably guided inside the elongate support (130, 230) and also accessible at the rear end thereof to operate a switching effect by mechanical actuation; and
a second control ring (120, 220) secured to the front end of the shaft (140, 240);
the lever being characterized by the fact that electrical connections (165, 166, 265, 266) associated with the electrical equipment are engaged between the body (100, 200) and the elongate support (130, 230) to be accessible from the rear end of the body, and the elongate support (130, 230) is in the form of a laterally open channel, at least over a fraction of its length.

2. A control lever according to claim 1, characterized by the fact that an indexing plate (150, 250) is placed between the first and second control rings (110, 210, 120, 220).

3. A control lever according to claim 2, characterized by the fact that the indexing plate (150) is fixed on the body (100).

4. A control lever according to claim 3, characterized by the fact that the indexing late (150) is fixed on a rib (106.1) integral with the inside surface of the body (100).

5. A control lever according to claim 2, characterized by the fact that the indexing plate (250) is fixed on the elongate support (230).

6. A control lever according to any one of claims 1 to 5, characterized by the fact that a contact-carrying plate (160, 260) is placed behind the first control ring (110, 210).

7. A control lever according to claim 6, characterized by the fact that the contact-carrying plate (160, 260) is fixed on the body (100, 200).

8. A control lever according to claim 7, characterized by the fact that the contact-carrying plate (160, 260) is fixed on ribs (106.2) provided on the inside surface of the body (100, 200).

9. A control lever according to any one of claims 6 to 8, characterized by the fact that the contact-carrying plate (160, 260) is provided with through conductor elements (163, 164, 261, 262).

10. A control lever according to claim 9, characterized by the fact that the through conductor elements (163, 164, 261, 262) on the back of the contact-carrying plate (160, 260) are connected to electrical connections (165, 166, 265, 266), and those on the front of the contact-carrying plate (160, 260) rest against the electrical equipment (113, 213).

11. A control lever according to claim 10, characterized by the fact that the equipment (113) is associated in translation with the first control ring (110).

12. A control lever according to claim 11, characterized by the fact that the through electrical conductor elements (161, 162) of the contact-carrying plate (160) are resilient.

13. A control lever according to claim 10, characterized by the fact that the equipment (213) is capable of moving in translation relative to the first control ring (210) while being constrained to rotate therewith, and by the fact that at least one spring (219) is interposed between the first control ring (210) and the contact-carrying plate (213).

14. A control lever according to claim 13, characterized by the fact that the through conductor elements of the contact-carrying plate (260) are rigid.

15. A control lever according to any one of claims 1 to 14, characterized by the fact that the shaft (140, 240) integral with the second control ring (120, 220) is formed by a hollow tubular element.

16. A control lever according to claim 15, characterized by the fact that it further includes a button (170) capable of moving in translation to actuate an electrical switch associated with electrically conductive connections (177, 178) engaged in the hollow tubular shaft (140).

17. A control lever according to claim 15, characterized by the fact that it further includes a button movable in translation to displace an associated rigid rod engaged in the hollow tubular shaft (140, 240).

18. A control lever according to any one of claims 1 to 17, characterized by the fact that at least one of the control rings (210, 220) comprises a continuous annular outer skirt occupying 360° around the axis (201) of the lever.

19. A control lever according to any one of claims 1 to 18, characterized by the fact that at least one of the rings (110, 120) includes an outer skirt (112, 123) defined by an angular sector around the axis (101) of the lever and accessible in a setback (104) provided in the body (100).

20. A control lever according to any one of claims 1 to 19, characterized by the fact that the body (100), at least over a fraction of its length, presents an angular sector defined relative to the axis (101) of the lever to enable lateral engagement of certain elements inside the body (100), and by the fact that a shell (103) is also provided which is adapted to be fixed on the sector shape of the body (100).
